# DEMANDE DE BREVET EUROPEEN

(11) **EP 0 805 298 A1**
(43) Date de publication de la demande: **05.11.1997**
(21) Numéro de dépôt: 97420070.1
(22) Date de dépôt: 29.04.1997
(51) Int. Cl.: F16L 33/26, F16L 51/02

(54) **Procédé pour la fixation des embouts de raccordement des tuyauteries flexibles à ondes hélicoidales**

(30) Priorité: 30.04.1996 FR 9605738
(71) Demandeur: Souplesse Fonctionnelle Systématique SFZ, 69680 Chassieu (FR)
(72) Inventeur: Stocker, Roger, 69300 Caluire (FR)
(74) Mandataire: Monnier, Guy

(57) **Abrégé**

Pour la fixation de chaque embout de raccordement (3) sur l'extrémité du tuyau à ondes hélicoïdales (1) revêtu de sa tresse de protection (2), on adapte en premier lieu, par simple vissage sur le complexe (1-2), un élément spiralé (4) en fil métallique, puis, après engagement de l'embout (3), on opère une soudure annulaire traversante (5) pour assurer l'assemblage efficace de l'ensemble (1-2-3-4).

## Description

La présente invention a trait aux compensateurs et autres tuyauteries flexibles qui sont constitués par une longueur de tuyau déformable recouverte par une tresse souple de protection, ladite longueur étant pourvue à ses extrémités d'embouts cylindriques de raccordement.

Le mode de fixation de ces embouts de raccordement sur les extrémités du complexe tuyau/tresse pose un problème particulier, au moins lorsqu'on désire adopter un processus de fabrication économique à cadence élevée. Si ce problème a reçu des solutions satistaisantes (voir par exemple FR-A-2 590 349 SFZ ou FR-A-2 636 120 SFZ) lorqu'on a affaire à des longueurs de tuyau du type annelé dans lequel les ondes déformables sont orientées de manière strictement transversale par rapport à l'axe, il n'en va pas de même dans le cas des tuyaux à ondes hélicoïdales.

Effectivement, dans ce second cas, l'orientation oblique des ondes du tuyau constitue une gêne qui oblige à adopter un processus de fixation des embouts en deux phases successives impliquant une reprise. En effet, avant d'emmancher sur l'extrémité du complexe tuyau/tresse la partie arrière d'emboîtement de l'embout qui est alors fixée par soudage audit complexe, il est nécessaire de déposer sur ce complexe un cordon de soudure assurant l'obtention d'une surface annulaire continue et régulière.

On conçoit que ce processus en deux phases avec reprise renchérit le coût de fabrication des tuyauteries flexibles, alors que le prix de revient des tuyaux à ondes hélicoïdales est inférieur à celui des tuyaux du type annelé. L'avantage économique de l'adoption des tuyaux à ondes hélicoïdales disparaît en conséquence.

C'est à cet inconvénient qu'entend principalement remédier la présente invention, laquelle a pour objet un procédé de fixation des embouts de raccordement qui est de nature à satisfaire les desiderata de la pratique, même dans le cas où les trois pièces concernées (tuyau à ondes hélicoïdales, tresse et embout) sont en acier inoxydable.

Le procédé suivant l'invention est défini à la revendication 1.

En fait, selon l'invention, on adapte sur chacune des extrémités libres du complexe tuyau/tresse un élément formé par un fil métallique enroulé en spirale au diamètre extérieur et au pas du tuyau, et on fixe par une soudure annulaire traversante l'embout engagé sur ledit complexe ainsi complété.

Certes, la mise en place de l'élément en fil spiralé constitue bien une phase préalable, mais on conçoit qu'elle peut être obtenue sans reprise par simple rotation (vissage) à l'aide d'un manipulateur classique dont l'intervention ne modifie pas sensiblement la cadence opératoire.

Le dessin annexé, donné à titre d'exemple, permettra de mieux comprendre l'invention, les caractéristiques qu'elle présente et les avantages qu'elle est susceptible de procurer:
- Figure 1 est une vue en plan avec arrachements montrant l'extrémité du complexe tuyau/tresse complétée par l'élément spiralé, préalablement à l'emmanchement de l'embout.
- Figure 2 est une coupe axiale de l'extrémité de la tuyauterie flexible après fixation de l'embout.

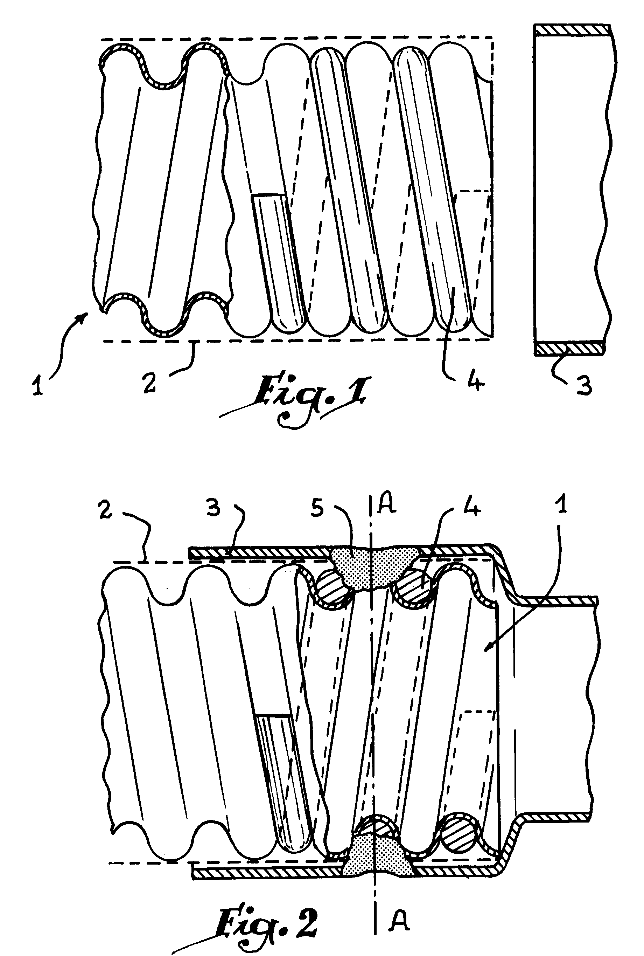

En figure 1, la référence 1 désigne l'une des extrémités d'une longueur de tuyau à ondes hélicoïdales de type usuel, qu'on peut supposer être réalisé en acier inoxydable. A la façon habituelle, cette longueur 1 est recouverte par une mince tresse de protection figurée par le tracé interrompu 2, ladite tresse étant elle-même en acier inoxydable.

Pour permettre la fixation de l'un des deux embouts 3 en acier inoxydable destinés au raccordement de la tuyauterie flexible à réaliser, suivant l'invention on a engagé sur l'extrémité de tuyau 1 un élément spiralé 4 constitué par une courte longueur d'un fil métallique enroulé hélicoïdalement au diamètre extérieur et au pas du tuyau 1. On conçoit que cet engagement peut être réalisé par simple vissage de l'élément 4 qu'il suffit de faire tourner suivant son axe une fois amené en coïncidence axiale avec la longueur 1, les quelques spires de cet élément 4 venant se loger à l'intérieur des spires de celle-ci.

Dans l'exemple de réalisation envisagé en fig. 1, on a supposé que l'élément 4 se trouvait engagé entre le tuyau 1 et la tresse 2, mais cette disposition n'est pas obligatoire, ledit élément 4 étant en fait susceptible d'être vissé par dessus la tresse 2.

Dans tous les cas cette mise en place peut être obtenue à l'aide d'un robot ou manipulateur classique, sans aucune difficulté. On obtient ainsi l'ensemble 1-2-4 représenté en figure 1, le complexe usuel 1-2 se trouvant de la sorte complété par l'élément spiralé 4.

Bien évidemment cet élément 4, susceptible d'être réalisé en un métal quelconque, ne gêne pas l'engagement de la partie arrière d'emboîtement de l'embout 3 considéré sur l'ensemble 1-2-3, comme illustré en figure 2. Il suffit alors de procéder à une soudure annulaire traversante suivant un axe A-A orienté perpendiculairement à l'axe du complexe 1-2. Par suite de la présence de l'élément 4, cette soudure assure l'obtention d'un cordon régulier de soudure 5 qui opère un assemblage parfaitement efficace, sans risque "d'effondrement" des spires du tuyau 1.

L'ensemble des opérations ne nécessite aucune reprise, si bien que la fabrication des tuyauteries flexibles est très économique, eu égard notamment au coût réduit des tuyaux à ondes hélicoïdales.

## Revendications

1. Procédé pour la fixation des embouts de raccordement sur les extrémités des tuyauteries flexibles constituées par un complexe comprenant une longueur d'un tuyau (1) à ondes hélicoïdales recouverte par une tresse métallique (2), lequel complexe doit être équipé de deux embouts terminaux (3), caractérisé en ce qu'il consiste à adapter tout d'abord sur chacune des extrémités du complexe (1-2) un élément spiralé (4) formé par un fil métallique enroulé en hélice au diamètre extérieur et au pas du tuyau (1), à engager ensuite la partie arrière d'emboîtement de l'embout (3) sur l'ensemble (1-2-4), et à opérer enfin annulairement, suivant un axe (A-A) perpendiculaire à l'axe dudit ensemble, une soudure traversante (5) pour assembler la partie arrière précitée aux trois constituants de l'ensemble (1-2-4).

2. Tuyauterie flexible, du genre constitué par une longueur de tuyau (1) à ondes hélicoïdales revêtue d'une tresse de protection (2) et équipée de deux embouts de raccordement (3), caractérisée en ce que les embouts (3) sont fixés en place par mise en oeuvre du procédé suivant la revendication 1.
